# EUROPÄISCHE PATENTSCHRIFT

(11) **EP 1 789 685 B1**
(45) Veröffentlichungstag und Bekanntmachung des Hinweises auf die Patenterteilung: **18.03.2009**
(21) Anmeldenummer: 05756931.1
(22) Anmeldetag: 14.06.2005
(51) Int. Cl.: F16B 13/08

(54) **HINTERSCHNITTANKER**
UNDERCUT ANCHOR
ANCRE CONTRE-DEPOUILLEE

(30) Priorität: 18.09.2004 DE 102004045439
(43) Veröffentlichungstag der Anmeldung: 30.05.2007
(73) Patentinhaber: fischerwerke GmbH & Co. KG, 72178 Waldachtal (DE)
(72) Erfinder: HACKER, Oliver, 72160 Horb (DE); SCHÄFFER, Marc, 72160 Horb-Bildechingen (DE)
(74) Vertreter: Suchy, Ulrich Johannes
(86) Internationale Anmeldenummer: PCT/EP2005/006355
(87) Internationale Veröffentlichungsnummer: WO 2006/029660

(56) Entgegenhaltungen:
- DE-A1- 19 648 542
- DE-U- 1 937 138
- US-A- 4 501 520

## Beschreibung

Die Erfindung betrifft einen Hinterschnittanker mit den Merkmalen des Oberbegriffs des Anspruchs 1.

Ein entsprechender, als Hinterschnittanker verwendbarer Anker, ist beispielsweise aus der Druckschrift US 4 501 520 bekannt. Der Anker weist einen Ankerkopf mit einem Spreizteil und einen Ankerschaft auf, wobei der Ankerkopf nicht kreisrund ist und an mehreren Umfangsstellen über den Ankerschaft vorsteht. Das Spreizteil wirkt als Drehsicherungsteil, um den Anker in einem hinterschnittenen Bohrloch derart zu verankern, dass er in verankerter Stellung nicht durch Drehen außer Hintergriff gebracht und aus dem Bohrloch entfernt werden kann.

Der erfindungsgemäße Hinterschnittanker ist zur Verankerung in einem nicht kreisrunden, eine Hinterschneidung aufweisenden Bohrlochs vorgesehen. Ein solches Bohrloch ist durch Ultraschallbohren mit einem Bohrwerkzeug herstellbar, das nicht kreisrund ist sondern beispielsweise einen dreiecksförmigen Querschnitt aufweist. Zum Bohren wird das Bohrwerkzeug zu Schwingungen im Ultraschallfrequenzbereich angeregt, es wird nicht drehend angetrieben. Weist das Bohrwerkzeug einen Bohrkopf mit dem nicht kreisrunden Querschnitt an einem Schaft auf, kann das Bohrwerkzeug am Ende der Bohrung gedreht und dadurch ein Hinterschnitt hergestellt werden.

Aufgabe der Erfindung ist es, einen Hinterschnittanker vorzuschlagen, der in einem derartigen Bohrloch formschlüssig verankerbar ist.

Diese Aufgabe wird erfindungsgemäß durch die Merkmale des Anspruchs 1 gelöst. Der erfindungsgemäße Hinterschnittanker weist einen Ankerschaft und einen Ankerkopf auf, wobei der Ankerkopf seitlich über den Ankerschaft vorsteht und nicht kreisrund ist. Vorzugsweise steht der Ankerkopf an einer oder mehreren Umfangsstellen seitlich über den Ankerschaft vor. Der Ankerkopf kann beispielsweise hammerkopfartig oder dreiecksförmig sein. Insbesondere weist der Hinterschnittanker dieselbe Geometrie wie das Bohrwerkzeug auf, eventuell kann der Hinterschnittanker als Bohrwerkzeug verwendet werden. Der Ankerkopf des erfindungsgemäßen Hinterschnittankers weist insbesondere denselben Querschnitt wie das Bohrloch auf, in dem der Hinterschnittanker verankert werden soll. Der Hinterschnittanker wird in das Bohrloch eingebracht und gedreht, wenn sich der Ankerkopf in der Hinterschneidung des Bohrlochs befindet, so dass der Ankerkopf die Hinterschneidung des Bohrlochs hintergreift. Der erfindungsgemäße Hinterschnittanker ist formschlüssig und mit großer Verankerungskraft im Bohrlochs verankert. Versagensfall ist eine Zerstörung eines Ankergrunds oder des Hinterschnittankers. Weitere Vorteile der Erfindung sind eine spreizdruckfreie Verankerung und die Möglichkeit einer einstückigen Ausbildung des Hinterschnittankers ohne Spreizhülse oder dgl.

Die Erfindung sieht ein Drehsicherungsteil vor, dessen Zweck es ist, den Hinterschnittanker in verankerter Stellung so zu halten, dass er nicht durch - Drehen außer Hintergriff gebracht werden kann. Ein begrenztes Drehspiel im Bohrloch kann akzeptabel sein. Das Drehsicherungsteil ist axial verschieblich auf dem Ankerschaft des Hinterschnittanker angeordnet. Das Drehsicherungsteil und der Hinterschnittanker bilden eine formschlüssige Schaltkupplung, die durch Verschieben des Drehsicherungsteils auf dem Ankerschaft in drehfesten Eingriff mit dem Hinterschnittanker bringbar ist. Wenn das Drehsicherungsteil in drehfestem Eingriff mit dem Hinterschnittanker steht, steht das Drehsicherungsteil an einer oder vorzugsweise mehreren und anderen Umfangsstellen als der Ankerkopf seitlich vom Ankerschaft ab, wodurch das Drehsicherungsteil gegen Drehen in dem nicht kreisrunden Bohrloch gehalten ist und seinerseits den Ankerkopf drehfest hält, so dass der Ankerkopf in der Hintergriffstellung bleibt.

Als formschlüssige Schaltkupplung kommen beispielsweise ein achsparalleler oder radialer Stift, der in eine Bohrung oder eine Nut eingreift, eine Nut- und Federverbindung, ein Polygon- oder Vielzahlprofil in Betracht. Eine Ausgestaltung der Erfindung sieht eine zum Ankerkopf korrespondierende Ausnehmung an einer dem Ankerkopf zugewandten Stirnseite des Drehsicherungsteils auf. Zum drehfesten Eingriff mit dem Hinterschnittanker wird das Drehsicherungsteil auf den Ankerkopf geschoben, so dass der Ankerkopf in die Ausnehmung des Drehsicherungsteils gelangt und dort drehfest gehalten ist. Die Ausgestaltung der Erfindung weist Ähnlichkeit mit einer Klauenkupplung auf. Sie ermöglicht eine einfache und wirkungsvolle Drehsicherung des Hinterschnittankers in einem Bohrloch.

In bevorzugter Ausgestaltung der Erfindung weisen der Ankerkopf und das Drehsicherungsteil übereinstimmende Querschnitte auf. Beim Einbringen in ein Bohrloch werden der Ankerkopf und das Drehsicherungsteil so gedreht, dass sie deckungsgleich sind. Im Bohrloch wird der Ankerkopf in die Hintergriffstellung gedreht, wogegen das Drehsicherungsteil drehfest im Bohrloch bleibt. Das Drehsicherungsteil wird auf den Ankerkopf geschoben und sichert diesen in der gedrehten Hintergriffstellung.

Die Erfindung wird nachfolgend an Hand eines in der Zeichnung dargestellten Ausführungsbeispiels näher erläutert.

Es zeigen:
- Figur 1: einen erfindungsgemäßen Hinterschnittanker in perspektivischer Explosionsdarstellung;
- Fig. 2 und 3: den Hinterschnittanker aus Figur 1 in zusammengesetztem Zustand in perspektivischer Darstellung in zwei verschiedenen Stellungen;
- Figur 4: ein Bohrloch zur Verankerung des Hinterschnittankers aus Figuren 1 und 2; und
- Figur 5: einen Querschnitt durch das Bohrloch aus Figur 3 in Höhe einer Hinterschneidung.

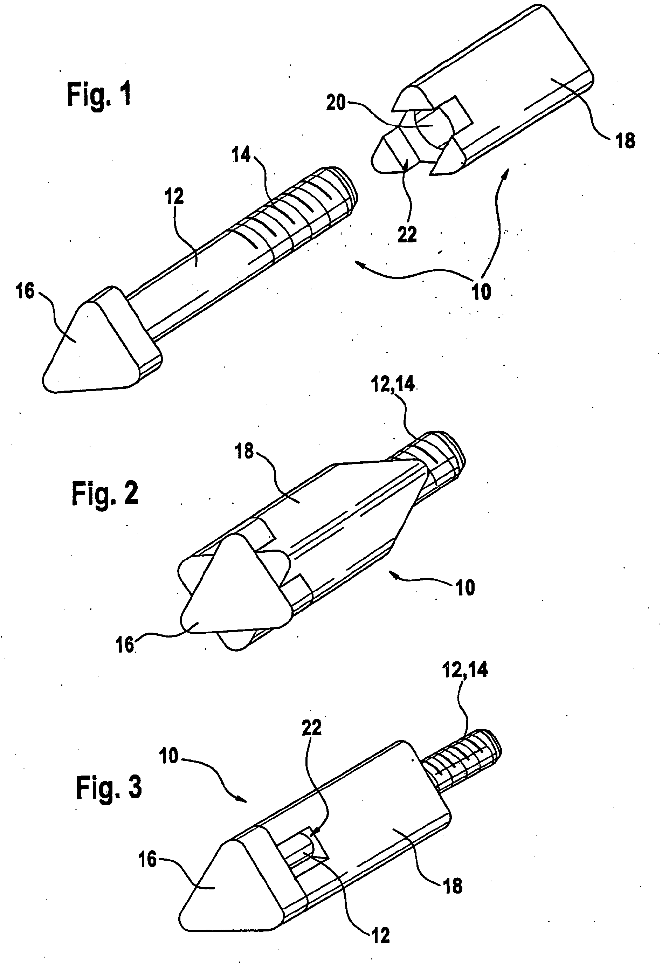

Der in Figur 1 dargestellte Hinterschnittanker 10 weist einen Ankerschaft 12 mit einem Gewinde 14 an einem und einem Ankerkopf 16 an einem anderen Ende auf. Der Ankerkopf 16 hat die Form einer dreieckigen Platte mit gerundeten Ecken, er steht seitlich über den Ankerschaft 12 vor. Der Ankerschaft 12 mit dem Ankerkopf 16 besteht beispielsweise aus Stahl, ggf. aus einem nichtrostenden Stahl.

Des Weiteren weist der Hinterschnittanker 10 ein Drehsicherungsteil 18 auf. Das Drehsicherungsteil 18 ist prismatisch, es weist einen mit dem Ankerkopf 16 übereinstimmenden dreieckigen Querschnitt mit gerundeten Kanten auf. Das Drehsicherungsteil 18 weist ein axiales Durchgangsloch 20 auf mit dem es in zusammengesetztem Zustand des Hinterschnittankers 10 dreh- und verschiebbar auf dem Ankerschaft 12 angeordnet ist. An einer dem Ankerkopf 16 zugewandten Stirnseite weist das Drehsicherungsteil 18 eine zum Ankerkopf 16 korrespondierende Ausnehmung 22 auf. Der Ankerkopf 16 passt wie in Figur 2 zu sehen in die Ausnehmung 22, wenn der Ankerkopf 16 gegenüber dem Drehsicherungsteil 18 um 60° gedreht ist. Die Ecken des dreieckigen Ankerkopfs 16 stehen seitlich über Außenflächen des Drehsicherungsteils 18 über. Wird der Ankerkopf 16 aus der Ausnehmung 22 herausgeschoben, lässt sich der Ankerkopf 16 gegenüber dem Drehsichefungsteil 18 so verdrehen, dass der Ankerkopf 16 mit dem Drehsicherungsteil 18 in axialer Wichtung gesehen deckungsgleich ist (Figur 3). Durch die Ausnehmung 22 bilden das Drehsicherungsteil 18 und der Ankerkopf 16 eine Art Klauenkupplung, d.h. eine formschlüssige Schaltkupplung. Der Ankerkopf 16 ist drehfest in der Ausnehmung 22 des Drehsicherungsteils 18 gehalten, wenn er in der Ausnehmung 22 einliegt. Befindet sich der Ankerkopf 16 außerhalb der Ausnehmung 22 ist er gegenüber dem Drehsicherungsteil 18 drehbar.

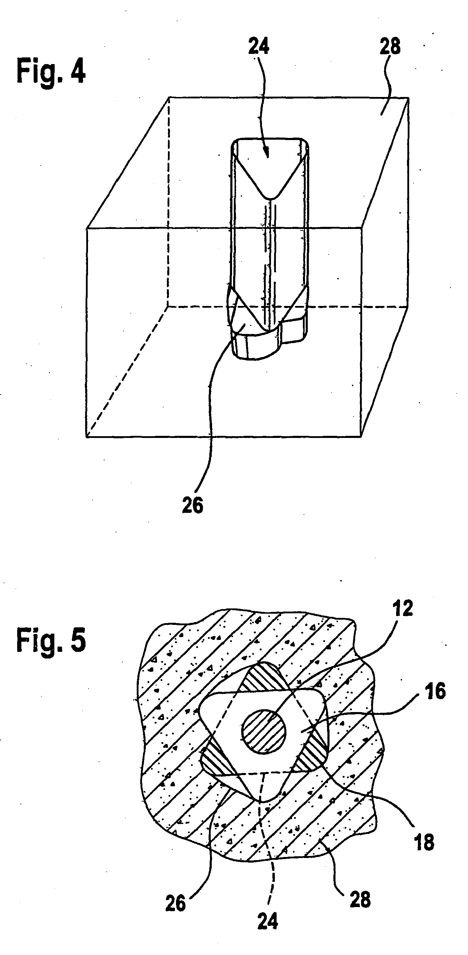

Der Hinterschnittanker 10 ist zur Verankerung in einem im Querschnitt dreieckigen Bohrloch 24 mit Hinterschneidungen 26 vorgesehen, wie es in Figur 4 dargestellt ist. In Figur 4 ist ein Ankergrund 28 durchsichtig dargestellt, um das Bohrloch 24 zu zeigen. Ein Querschnitt des Bohrlochs 24 stimmt mit dem Querschnitt des Ankerkopfs 16 überein, d.h. das Bohrloch 24 weist einen dreiecksförmigen Querschnitt mit gerundeten Kanten auf. Der Ankergrund 28 ist beispielsweise Stein oder Beton. Hergestellt ist das Bohrloch 24 durch Ultraschallbohren. Ein nicht dargestelltes Bohrwerkzeug weist einen Schaft mit einem Bohrkopf auf, wobei die Geometrie des Bohrkopfs mit der Geometrie des Ankerkopfs 16 übereinstimmt. Eventuell kann der Schaft 12 mit dem Ankerkopf 16 als Bohrwerkzeug benutzt werden. Zum Bohren wird das nicht dargestellte Bohrwerkzeug zu Schwingungen im Ultraschallfrequenzbereich angeregt und ohne Drehung in den Ankergrund 28 gesenkt. Nach Erreichen einer vorgesehenen Bohrlochtiefe wird das Bohrwerkzeug um 60° gedreht, wodurch die Hinterschneidungen 26 hergestellt werden. Die Hinterschneidungen 26 sind in Figur 5 zu sehen, das Bohrloch 24 ist mit Strichlinien angedeutet, es ist deckungsgleich mit dem Drehsicherungsteil 18. Anschließend wird das Bohrwerkzeug ohne Schwingungsanregung zurückgedreht und aus dem Bohrloch 24 herausgezogen. Der Hinterschnittanker 10 wird in das Bohrloch 24 eingebracht, wobei der Ankerkopf 16 wie in Figur 3 dargestellt deckungsgleich mit dem Drehsicherungsteil 18 ausgerichtet ist. Wenn der Ankerkopf 16 am Bohrlochgrund aufsitzt, wird er am aus dem Bohrloch 24 vorstehenden Schaft 12 gedreht bis er anstößt. Der dreieckige Ankerkopf 16 hintergreift mit seinen Ecken die Hinterschneidungen 26 des Bohrlochs 24, der Hinterschnittanker 10 ist im Bohrloch 24 verankert. Das Drehsicherungsteil 18 ist auf Grund seines mit dem Querschnitt des Bohrlochs 24 übereinstimmenden Querschnitts drehfest im Bohrloch 24 gehalten und dreht sich nicht mit dem Ankerkopf 16 mit. Nachdem der Ankerkopf 16 gedreht worden ist wird das Drehsicherungsteil 18 tiefer in das Bohrloch 24 geschoben, so dass das Drehsicherungsteil 18 mit seiner Ausnehmung 22 auf den Ankerkopf 16 gelangt. Der Ankerkopf 16 ist drehfest in der Ausnehmung 22 des Drehsicherungsfeils 18 gehalten und lässt sich nicht mehr drehen, da das Drehsicherungsteil 18 drehfest im Bohrloch 24 gehalten ist. Der Ankerkopf 16 ist dadurch gegen Drehen gesichert und lässt sich nicht außer Eingriff von den Hinterschneidungen 26 des Bohrlochs 24 bringen, wenn nicht zuvor das Drehsicherungsteil 18 zurückgezogen wird. Der Hinterschnittanker 10 ist gegen Lösen gesichert.

## Patentansprüche

1. Hinterschnittanker mit einem Ankerschaft und einem Ankerkopf, der seitlich über den Ankerschaft vorsteht, wobei der Ankerkopf (16) nicht kreisrund ist, der Ankerkopf (16) an einer oder mehreren Umfangsstellen seitlich über den Ankerschaft (12) vorsteht, und der Hinterschnittanker (10) ein Drehsicherungsteil (18) aufweist, **dadurch gekennzeichnet, dass** das Drehsicherungsteil (18) axial verschieblich auf dem Ankerschaft (12) angeordnet ist, dass das Drehsicherungsteil (18) mit dem Hinterschnittanker (10) eine formschlüssige Schaltkupplung bildet, die durch Verschieben des Drehsicherungsteils (18) auf dem Ankerschaft (12) in drehfesten Eingriff mit dem Hinterschnittanker (10) bringbar ist, und dass das Drehsicherungsteil (18) an anderer Umfangsstelle als der Ankerkopf (16) seitlich vom Ankerschaft (12) absteht, wenn es in drehfestem Eingriff mit dem Hinterschnittanker (10) steht.

2. Hinterschnittanker nach Anspruch 1, **dadurch gekennzeichnet, dass** das Drehsicherungsteil (18) eine zum Ankerkopf (16) korrespondierende Ausnehmung an seiner dem Ankerkopf (16) zugewandten Stirnseite aufweist, mit der es zum drehfesten Eingriff auf den Ankerkopf (16) schiebbar ist.

3. Hinterschnittanker nach Anspruch 1, **dadurch gekennzeichnet, dass** das Drehsicherungsteil (18) und der Ankerkopf (16) übereinstimmende, nicht kreisrunde Querschnitte aufweisen, die bei drehfestem Eingriff des Drehsicherungsteils (18) mit dem Hinterschnittanker (10) gegeneinander verdreht sind.

## Claims

1. Undercut anchor having an anchor shank and an anchor head which projects out laterally beyond the anchor shank, the anchor head (16) not being circular, the anchor head (16) projecting laterally beyond the anchor shank (12) at one or more peripheral locations, and the undercut anchor (10) comprising an anti-rotation part (18), **characterised in that** the anti-rotation part (18) is arranged so as to be axially displaceable on the anchor shank (12); **in that** the anti-rotation part (18), together with the undercut anchor (10), forms an interlocking engagement coupling which, as a result of displacement of the anti-rotation part (18) on the anchor shank (12), is arranged to be so brought into engagement with the undercut anchor (10) that relative rotation is not possible; and **in that** the anti-rotation part (18), when in engagement with the undercut anchor (10) such that relative rotation is not possible, projects out laterally from the anchor shank (12) at a different peripheral location to the anchor head (16).

2. Undercut anchor according to claim 1, **characterised in that** the anti-rotation part (18) has, at its end face facing the anchor head (16), a recess which corresponds to the anchor head (16), by virtue of which recess the anti-rotation part (18) can be pushed up to the anchor head (16) for engagement such that relative rotation is not possible.

3. Undercut anchor according to claim 1, **characterised in that** the anti-rotation part (18) and the anchor head (16) have matching, non-circular cross-sections, which are offset from one another when the anti-rotation part (18) and the undercut anchor (10) are in engagement such that relative rotation is not possible.

## Revendications

1. Ancre contre-dépouillée comprenant une tige d'ancrage et une tête d'ancrage faisant saillie latéralement au-delà de ladite tige d'ancrage, sachant que ladite tête d'ancrage (16) n'est pas circulaire, que ladite tête d'ancrage (16) fait latéralement saillie au-delà de la tige d'ancrage (12) dans une ou plusieurs zone(s) du pourtour, et que ladite ancre contre-dépouillée (10) présente une pièce (18) de verrouillage rotatif, **caractérisée par le fait que** ladite pièce (18) de verrouillage rotatif est agencée sur la tige d'ancrage (12) avec faculté de coulissement axial ; **par le fait que** ladite pièce (18) de verrouillage rotatif forme, avec ladite ancre contre-dépouillée (10), un accouplement sélecteur par concordance de formes qui peut être mis en prise de verrouillage rotatif avec ladite ancre contre-dépouillée (10), suite à un coulissement de la pièce (18) de verrouillage rotatif sur la tige d'ancrage (12) ; et **par le fait que** ladite pièce (18) de verrouillage rotatif dépasse latéralement au-delà de la tige d'ancrage (12), dans une zone du pourtour autre que celle de la tête d'ancrage (16), lorsque ladite pièce est en prise de verrouillage rotatif avec ladite ancre contre-dépouillée (10).

2. Ancre contre-dépouillée selon la revendication 1, **caractérisée par le fait que** la pièce (18) de verrouillage rotatif comporte un évidement complémentaire de la tête d'ancrage (16) à sa face extrême tournée vers ladite tête d'ancrage (16) et par laquelle ladite pièce peut coulisser, sur ladite tête d'ancrage (16), en vue de la venue en prise avec verrouillage rotatif.

3. Ancre contre-dépouillée selon la revendication 1, **caractérisée par le fait que** la pièce (18) de verrouillage rotatif et la tête d'ancrage (16) possèdent des sections transversales coïncidentes, non circulaires, qui sont animées de rotations mutuelles lorsque ladite pièce (18) de verrouillage rotatif vient en prise de verrouillage rotatif avec ladite ancre contre-dépouillée (10).
